# EUROPEAN PATENT SPECIFICATION

(11) **EP 3 718 753 B1**
(45) Date of publication and mention of the grant of the patent: **29.09.2021**
(21) Application number: 20162675.1
(22) Date of filing: 12.03.2020
(51) Int. Cl.: B29D 30/06, B29D 30/08, B29D 30/30, B29D 30/00

(54) **MANUFACTURING METHOD FOR PNEUMATIC TIRE**
VERFAHREN ZUR HERSTELLUNG VON LUFTREIFEN
PROCÉDÉ DE FABRICATION D'UN PNEU

(30) Priority: 03.04.2019 JP 2019071384
(43) Date of publication of application: 07.10.2020
(73) Proprietor: Sumitomo Rubber Industries, Ltd., Kobe-shi, Hyogo-ken 651-0072 (JP)
(72) Inventor: SHIGETANI, Akihiro, Kobe-shi, Hyogo-ken 651-0072 (JP)
(74) Representative: Manitz Finsterwald Patent- und Rechtsanwaltspartnerschaft mbB

(56) References cited:
- EP-A2- 0 978 370
- JP-A- 2006 341 471
- KR-A- 20130 063 224

## Description

### BACKGROUND OF THE INVENTION

### Field of the Invention

The present invention relates to a manufacturing method for a pneumatic tire.

### Description of the Background Art

Japanese Laid-Open Patent Publication No. 2014-19062 describes obtaining a tire from a raw cover through vulcanization of the raw cover. Japanese Laid-Open Patent Publication No. 2014-19062 indicates that, in the vulcanization, it takes time to increase the temperatures of thick portions of a tread portion, bead portions, and the like of the raw cover. Japanese Laid-Open Patent Publication No. 2014-19062 further indicates that, in view of this circumstance, a vulcanization time for the raw cover is set so as to sufficiently conduct heat also to the inside of the thick portions.

There is variation, in the time taken to complete the vulcanization, among such raw covers. The vulcanization time for the raw covers is set through addition of a safety factor obtained in consideration of the variation. There are various factors of the variation in the time taken to complete the vulcanization, and variation in thickness is a major factor of the variation. Therefore, the vulcanization time for each raw cover can be set with higher accuracy through measurement of the thickness of the raw cover. If the vulcanization time is set with high accuracy, extra time due to the safety factor can be shortened. In addition, it is also possible to inhibit over-vulcanization from occurring by excessively lengthening the vulcanization time. Thus, the measurement of the thickness of the raw cover to be vulcanized can contribute to improvement in the productivity and the quality of a tire.

However, the raw cover has a toroidal shape, and the thickness of the raw cover greatly varies depending on the portion thereof. Thus, the thickness cannot be easily measured. Furthermore, the raw cover is formed of unvulcanized rubber, and thus easily deforms. Therefore, the thickness of the raw cover cannot be easily measured accurately. Patent document JP 2006 341471 A sets a vulcanising time for a green tyre, based on thickness data determined from a previously produced tyre.

### SUMMARY OF THE INVENTION

An object of the present invention is to provide a tire manufacturing method that contributes to improvement in the productivity and the quality of a tire.

A manufacturing method for a pneumatic tire according to the present invention includes the steps of:
(A) measuring a thickness of a first formed product formed by winding a plurality of rubber members including a carcass ply around a first drum;
(B) measuring a thickness of a second formed product formed by winding a plurality of other rubber members including a tread around a second drum;
(C) combining the first formed product and the second formed product with each other, to form a raw cover; and
(D) vulcanizing the raw cover for a vulcanization time that is determined on the basis of the thickness of the first formed product and the thickness of the second formed product.

It is preferable that, in the step (A), a thickness, of the first formed product, at a position that corresponds to a position, in the raw cover, at which a longest time is required to increase a temperature of the raw cover, is measured. It is preferable that, in the step (B), a thickness, of the second formed product, at a position that corresponds to the position, in the raw cover, at which the longest time is required to increase the temperature, is measured.

It is preferable that, in the step (A), the thickness of the first formed product is measured at a predetermined circumferential interval. It is preferable that, in the step (B), the thickness of the second formed product is measured at a predetermined circumferential interval. It is preferable that, in the step (C), the first formed product and the second formed product are combined with each other at a relative position at which a difference between a maximum value and a minimum value in a circumferential direction of a thickness obtained by summing the thickness of the first formed product and the thickness of the second formed product, becomes minimum.

It is preferable that, in the step (A) and the step (B), the circumferential interval is set to a central angle.

It is preferable that, in the step (B), the thickness of the second formed product is measured with the circumferential interval on an outer circumferential surface of the second drum being set to 3 mm or less.

It is preferable that, in the step (D), the vulcanization time is determined from a thickness of the raw cover on the basis of a preset correlation between the vulcanization time and a thickness of a model for the raw cover.

It is preferable that, in the step (A), each time one of the plurality of rubber members is wound around the first drum, a thickness obtained by the winding is measured.

It is preferable that, in the step (B), each time one of the plurality of other rubber members is wound around the second drum, a thickness obtained by the winding is measured.

In the manufacturing method for a pneumatic tire according to the present invention, the thickness is calculated for each raw cover. The vulcanization time for the raw cover is determined on the basis of the calculated thickness. Accordingly, the vulcanization time is inhibited from lengthening more than necessary. In this manufacturing method, the thickness of the first formed product wound around the first drum is measured. The thickness of the second formed product wound around the second drum is measured. The thickness of the raw cover is calculated from the thickness of the first formed product and the thickness of the second formed product. Accordingly, the thickness of the raw cover can be easily calculated with high accuracy.

### BRIEF DESCRIPTION OF THE DRAWINGS

FIG. 1 is a schematic diagram of a pneumatic tire forming apparatus according to an embodiment of the present invention;
FIG. 2 is an explanatory diagram illustrating a state in which the forming apparatus in FIG. 1 is used;
FIG. 3 is an explanatory diagram illustrating another state in which the forming apparatus in FIG. 1 is used; and
FIG. 4 is an explanatory diagram illustrating a still another state in which the forming apparatus in FIG. 1 is used.

### DESCRIPTION OF THE PREFERRED EMBODIMENTS

Hereinafter, the present invention will be described in detail on the basis of a preferred embodiment with appropriate reference to the drawings.

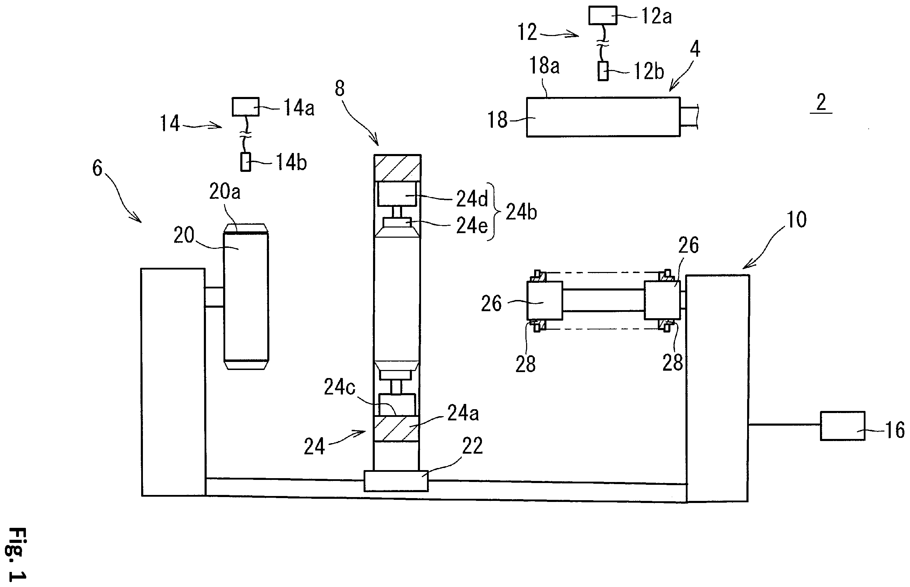

FIG. 1 shows a forming apparatus 2 used in a manufacturing method for a pneumatic tire according to the present invention. The forming apparatus 2 includes a first forming device 4, a second forming device 6, a transportation device 8, a shaping former 10, a first profile measurement device 12, a second profile measurement device 14, and a control device 16.

The first forming device 4 includes a first drum 18. The first drum 18 has a cylindrical shape. The first drum 18 is rotatable about the axis thereof. The diameter of the first drum 18 can be increased and reduced.

The second forming device 6 includes a second drum 20. The second drum 20 has a cylindrical shape. The second drum 20 is rotatable about the axis thereof. The diameter of the second drum 20 can be increased and reduced.

The transportation device 8 includes a moving unit 22 and a holding unit 24. The moving unit 22 is movable between the second forming device 6 and the shaping former 10. The holding unit 24 is mounted to the moving unit 22. The holding unit 24 includes an annular frame 24a and a plurality of holders 24b. The holders 24b are each disposed in an opening 24c of the annular frame 24a. The holders 24b are arranged at equal intervals along the circumferential direction of the opening 24c. The holders 24b are rotatable together with each other around the axis of the annular frame 24a.

Each holder 24b includes a body 24d and a clamp 24e. The clamp 24e is supported by the body 24d. The clamp 24e is movable in the radial direction of the opening 24c. The diameter formed by the plurality of clamps 24e can be increased and reduced in the radial direction of the opening 24c such that the clamps 24e are kept located on the same circle in a cross section that is perpendicular to the axial direction.

The shaping former 10 includes a pair of movable bodies 26 and a pair of bead-receiving portions 28. The movable bodies 26 each have a cylindrical shape. The movable bodies 26 are movable so as to be closer to and apart from each other in the axial direction. The pair of bead-receiving portions 28 are mounted to the movable bodies 26. The gap in the axial direction between the pair of bead-receiving portions 28 is changeable. The bead-receiving portions 28 are movable so as to be closer to and apart from each other in the axial direction. The pair of movable bodies 26 and the pair of bead-receiving portions 28 are rotatable about the axis thereof.

The first profile measurement device 12 includes a body 12a and a sensor 12b. The sensor 12b has a function of measuring the position of the outer circumferential surface of an object wound around the first drum 18, e.g., a formed product wound around the first drum 18. The sensor 12b is not particularly limited and is, for example, a laser sensor. The body 12a has a function of transmitting, to the control device 16, outer circumferential surface position data obtained from the sensor 12b.

The second profile measurement device 14 includes a body 14a and a sensor 14b. The sensor 14b has a function of measuring the position of the outer circumferential surface of an object wound around the second drum 20, e.g., a formed product wound around the second drum 20. The sensor 14b is not particularly limited and is, for example, a laser sensor. The body 14a has a function of transmitting, to the control device 16, outer circumferential surface position data obtained from the sensor 14b.

The control device 16 includes: a calculation section for performing calculation; a control section for controlling the devices; a storage section for storing data; an input section into which information is inputted; an output section from which information is outputted; and an interface section through which a signal from an input device is inputted and a signal is outputted to an output device. The control device 16 has a function of controlling the first forming device 4, the second forming device 6, the transportation device 8, the shaping former 10, the first profile measurement device 12, and the second profile measurement device 14. The control device 16 includes, for example, a processor, a memory, a keyboard, a display, and an interface board.

The control device 16 has a function of receiving outer circumferential surface position data from the first profile measurement device 12. The control device 16 has a function of storing the outer circumferential surface position data and circumferential position data, regarding the first drum 18, that corresponds to the outer circumferential surface position data. The control device 16 has a function of calculating, from the outer circumferential surface position data, the thickness of the formed product wound around the first drum 18. The control device 16 has a function of receiving outer circumferential surface position data from the second profile measurement device 14. The control device 16 has a function of storing the outer circumferential surface position data and circumferential position data, regarding the second drum 20, that corresponds to the outer circumferential surface position data. The control device 16 has a function of calculating, from the outer circumferential surface position data, the thickness of the formed product wound around the second drum 20.

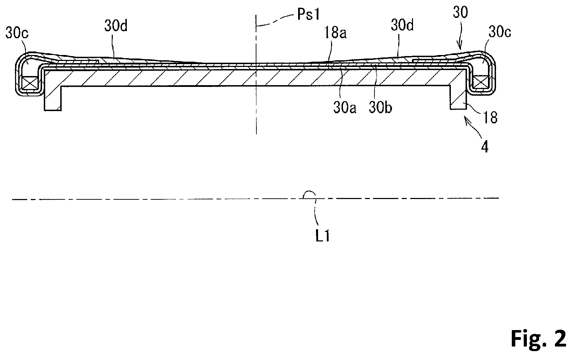

FIG. 2 illustrates a state in which the first forming device 4 is used. FIG. 2 shows the first drum 18 of the first forming device 4 and a first formed product 30 wound around the first drum 18. The first formed product 30 includes an inner liner member 30a, a carcass ply 30b, a pair of bead members 30c, and sidewall members 30d.

The inner liner member 30a is a member to form the inner liner of a tire. The carcass ply 30b is a member to form the carcass of the tire. The pair of bead members 30c are members to form the beads of the tire. The sidewall members 30d are members to form the sidewalls of the tire. In FIG. 2, the inner liner member 30a, the carcass ply 30b, and the sidewall members 30d which are each belt-shaped are wound around the first drum 18 so as to be superposed on each other. The bead members which are ring-shaped are combined with these members. All of the members are wound around an outer circumferential surface 18a, thereby forming the first formed product 30.

An alternate long and short dash line L1 in FIG. 2 indicates the rotational axis of the first drum 18. An alternate long and short dash line Ps1 in the FIG. 2 indicates a position, in the axial direction, for measurement by the sensor 12b of the first profile measurement device 12.

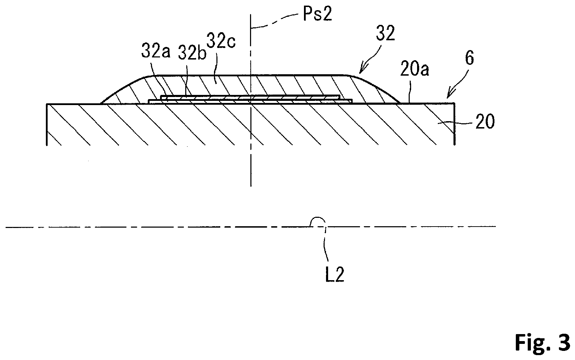

FIG. 3 illustrates a state in which the second forming device 6 is used. FIG. 3 shows the second drum 20 of the second forming device 6 and a second formed product 32 wound around the second drum 20. The second formed product 32 includes a first belt member 32a, a second belt member 32b, and a tread member 32c.

The first belt member 32a is a member to form a first belt of the tire. The second belt member 32b is a member to form a second belt of the tire. The tread member 32c is a member to form the tread of the tire. In FIG. 3, the first belt member 32a, the second belt member 32b, and the tread member 32c which are each belt-shaped are wound around the second drum 20 so as to be superposed on each other. The members are wound around an outer circumferential surface 20a, thereby forming the second formed product 32.

An alternate long and short dash line L2 in FIG. 3 indicates the rotational axis of the second drum 20. An alternate long and short dash line Ps2 in FIG. 3 indicates a position, in the axial direction, for measurement by the sensor 14b of the second profile measurement device 14.

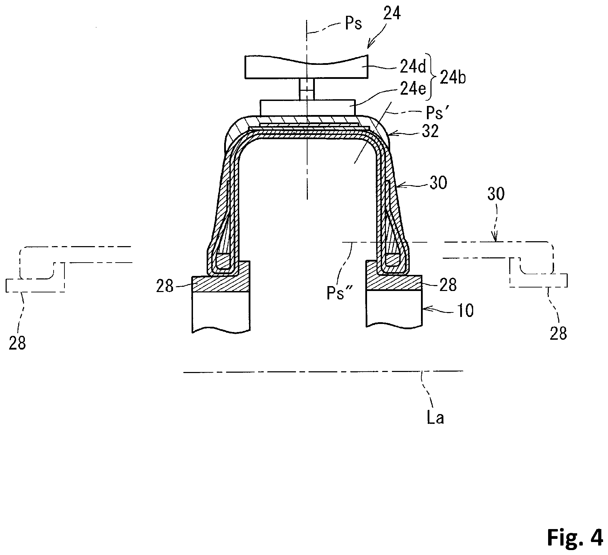

FIG. 4 illustrates a state in which the shaping former 10 is used. FIG. 4 shows the bead-receiving portions 28 of the shaping former 10, a part of the holding unit 24 of the transportation device 8, the first formed product 30, and the second formed product 32. The first formed product 30 and the second formed product 32 are combined with each other, thereby obtaining a raw cover. The raw cover has a toroidal shape. The pair of bead-receiving portions 28 are located close to each other in the axial direction. The holders 24b of the holding unit 24 are located radially outward of the pair of bead-receiving portions 28.

FIG. 4 indicates, by an alternate long and two short dashes line, a part of the first formed product 30 having a cylindrical shape, and the pair of bead-receiving portions 28 supporting the first formed product 30. The pair of bead-receiving portions 28 indicated by the alternate long and two short dashes line are located apart from each other in the axial direction.

An alternate long and short dash line Ps in FIG. 4 indicates a position, in the raw cover, in the axial direction at which the longest time is required to increase a temperature of the raw cover. The position Ps in the axial direction corresponds to the latitude of an equator plane which means the center in the axial direction of the raw cover. The position Ps in this raw cover is the position at which the raw cover has the largest thickness. The position Ps1 in the first formed product 30 in FIG. 2 indicates a position, in the first formed product 30, that matches the position Ps in the raw cover when the raw cover is formed. In the present invention, this state is expressed as "the position Ps1 in the first formed product 30 corresponds to the position Ps". Similarly, the position Ps2 in the second formed product 32 in FIG. 3 corresponds to the position Ps.

Here, description is made based on an example where the position Ps, in the raw cover, at which the longest time is required to increase the temperature is the center in the axial direction of the tread. However, the present invention is not limited thereto. The position Ps at which the longest time is required to increase the temperature varies depending on the shape of the raw cover or the like. For example, depending on the raw cover, the position Ps may be the position, of each of buttresses, indicated by the alternate long and short dash line Ps' in FIG. 4, or a position that is near each of the beads and that is indicated by the alternate long and short dash line Ps" in FIG. 4. In the case of a raw cover in which the longest time is required at the position Ps' to increase the temperature, the thicknesses of the first formed product 30 and the second formed product 32 are measured at the positions, in the first formed product 30 and the second formed product 32, that correspond to the position Ps'. Meanwhile, in the case of a raw cover in which the longest time is required at the position Ps" to increase the temperature, the thicknesses of the first formed product 30 and the second formed product 32 are measured at the positions, in the first formed product 30 and the second formed product 32, that correspond to the position Ps".

A tire manufacturing method will be described using the forming apparatus 2 with reference to FIG. 1 to FIG. 4. The tire manufacturing method includes a forming step and a vulcanizing step. In the forming step, the members to form the respective components of a tire are combined with each other using the forming apparatus 2, thereby forming a raw cover. In the vulcanizing step, the raw cover is vulcanized. As a result of the vulcanization, a tire is obtained from the raw cover.

In the forming step, a plurality of members to form the first formed product 30, such as the inner liner member 30a, the carcass ply 30b, the pair of bead members 30c, and the pair of sidewall members 30d, are prepared (step 1).

The plurality of members prepared in step 1 are sequentially wound around the first drum 18 (step 2). In step 2, the inner liner member 30a is first wound around the outer circumferential surface 18a of the first drum 18. In the state where the inner liner member 30a is wound, the position of the outer circumferential surface of the inner liner member 30a is measured at the position Ps1. The thickness of the inner liner member 30a is measured from the difference in the radial direction between the position of the outer circumferential surface of the inner liner member 30a and the position of the outer circumferential surface 18a of the first drum 18. The thickness at the position Ps1 of the inner liner member 30a is measured at a predetermined circumferential interval, e.g., at an interval that is a central angle of 3°, around the first drum 18. The control device 16 stores the measured thickness and the measurement position in the circumferential direction. The measurement position in the circumferential direction can be easily obtained from the rotational position of the first drum 18.

Then, the carcass ply 30b is wound around the outer circumferential surface of the inner liner member 30a. In the state where the carcass ply 30b is wound, the position of the outer circumferential surface of the carcass ply 30b is measured at the position Ps1. Accordingly, the thickness of the carcass ply 30b is measured. The control device 16 stores the thickness and the measurement position in the circumferential direction. The bead members 30c are disposed on the outer circumferential surface of the wound carcass ply 30b. End portions of the carcass ply 30b are turned up around the bead members 30c. Furthermore, the pair of sidewall members 30d are wound around the outer circumferential surface of the carcass ply 30b. In this manner, the plurality of members prepared in step 1 are sequentially wound around the first drum 18, thereby forming the first formed product 30 as shown in FIG. 2. In step 2, each time one of the members is wound to form an intermediary body, the thickness of the intermediary body is measured at the position Ps1. In addition, the thickness of the first formed product 30 is measured at the position Ps1. These thicknesses are obtained together with the corresponding measurement positions in the circumferential direction.

A plurality of other members to form the second formed product 32, such as the first belt member 32a, the second belt member 32b, and the tread member 32c, are prepared (step 3).

The plurality of other members prepared in step 3 are sequentially wound around the second drum 20 (step 4). In step 4, the first belt member 32a is first wound around the outer circumferential surface 20a of the second drum 20. In the state where the first belt member 32a is wound, the position of the outer circumferential surface of the first belt member 32a is measured at the position Ps2. The thickness of the first belt member 32a is measured from the difference in the radial direction between the position of the outer circumferential surface of the first belt member 32a and the position of the outer circumferential surface 20a of the second drum 20. As in step 2, the thickness at the position Ps2 of the first belt member 32a is measured at a predetermined circumferential interval, e.g., at an interval that is a central angle of 3°, in the circumferential direction of the second drum 20. The control device 16 stores the thickness and the measurement position in the circumferential direction.

Then, the second belt member 32b is wound around the outer circumferential surface of the first belt member 32a. In the state where the second belt member 32b is wound, the position of the outer circumferential surface of the second belt member 32b is measured at the position Ps2. Accordingly, the thickness of the second belt member 32b is measured. The control device 16 stores the thickness and the measurement position in the circumferential direction. The tread member 32c is wound around the outer circumferential surface of the second belt member 32b. In the state where the tread member 32c is wound, the position of the outer circumferential surface of the tread member 32c is measured at the position Ps2. Accordingly, the thickness of the tread member 32c is measured. The control device 16 stores the thickness and the measurement position in the circumferential direction. In this manner, the plurality of other members prepared in step 3 are sequentially wound around the second drum 20, thereby forming the second formed product 32 as shown in FIG. 3. In step 4, each time one of the members is wound to form an intermediary body, the thickness of the intermediary body is measured at the position Ps2. In addition, the thickness of the second formed product 32 is measured at the position Ps2. These thicknesses are obtained together with the corresponding measurement positions in the circumferential direction.

The first formed product 30 obtained in step 2 is placed on the shaping former 10 (step 5). As indicated by the alternate long and two short dashes line in FIG. 4, the ends of the first formed product 30 are supported by the bead-receiving portions 28.

The second formed product 32 obtained in step 4 is placed radially outward of the first formed product 30 (step 6). In step 6, the second formed product 32 held by the holders 24b of the transportation device 8 shown in FIG. 1 is placed radially outward of the first formed product 30. The control device 16 stores: the thickness at the position Ps1 of the first formed product 30 and the corresponding position in the circumferential direction; and the thickness at the position Ps2 of the second formed product 32 and the corresponding position in the circumferential direction. A relative position at which the first formed product 30 and the second formed product 32 are joined is calculated such that the thickness at the position Ps becomes uniform in the circumferential direction. Specifically, a relative position at which the first formed product 30 and the second formed product 32 are joined is calculated such that the difference between the maximum value and the minimum value of the thickness at the position Ps becomes minimum. Both or either of the first formed product 30 and the second formed product 32 is rotated such that the first formed product 30 and the second formed product 32 are located at the relative position.

The first formed product 30 is filled with a pressure fluid, e.g., air, such that the first formed product 30 is inflated into a toroidal shape (step 7). In step 7, as the first formed product 30 is inflated, the pair of bead-receiving portions 28 are moved so as to be close to each other. As shown in FIG. 4, the outer circumferential surface of the inflated first formed product 30 is adhered to the inner circumferential surface of the second formed product 32 (step 8). Then, the second formed product 32 is pressure-bonded to the first formed product 30 with a stitcher (not shown) (step 9). Thus, a raw cover is formed.

The control device 16 calculates the thickness at the position Ps of the raw cover (step 10). In step 10, the control device 16 calculates the thickness at the position Ps of the raw cover on the basis of the thickness at the position Ps1 of the first formed product 30 and the thickness at the position Ps2 of the second formed product 32.

The control device 16 determines a vulcanization time on the basis of the thickness at the position Ps of the raw cover (step 11). For example, a correlation between the thickness at the position Ps and the vulcanization time is obtained in advance using a model for the raw cover. The control device 16 stores the correlation. From the correlation, a vulcanization time that corresponds to the thickness calculated in step 10 is determined.

In the vulcanizing step, the raw cover is vulcanized for the vulcanization time determined in step 11 (step 12). As a result of the vulcanization, a tire is obtained from the raw cover.

In the tire manufacturing method, the thickness is calculated for each raw cover in step 10. In step 11, the vulcanization time for the raw cover is determined on the basis of the calculated thickness. Accordingly, the vulcanization time is inhibited from lengthening more than necessary. In addition, over-vulcanization and insufficient vulcanization are inhibited from occurring in obtaining the tire from the raw cover.

In step 2, the thickness of the first formed product 30 wound around the first drum 18 is measured. Since the first formed product 30 is wound around the first drum 18, the first formed product 30 is inhibited from being deformed. Since the thickness is measured relative to the outer circumferential surface 18a of the first drum 18, the thickness can be measured with high accuracy. In step 4, the thickness of the second formed product 32 wound around the second drum 20 is measured. Accordingly, the thickness of the second formed product 32 can be measured with high accuracy as in the case of the first formed product 30.

The thickness of the raw cover is calculated at the position Ps at which the longest time is required to increase the temperature. The thickness of the first formed product 30 is measured at the position Ps1 which corresponds to the position Ps. The thickness of the second formed product 32 is measured at the position Ps2 which corresponds to the position Ps. Accordingly, the tire manufacturing method enables the raw cover to be vulcanized for a more appropriate vulcanization time.

In the axial direction of this raw cover, the position Ps at which the longest time is required to increase the temperature is the center of the tread. However, the position Ps is not limited thereto. The position Ps at which the longest time is required to increase the temperature varies depending on the shape of the raw cover or the like. For example, as shown in FIG. 4, the position at which the longest time is required to increase the temperature, may be the position Ps' near each of the buttresses or the position Ps" near each of the beads. In such a raw cover, the thicknesses of the first formed product 30 and the second formed product 32 are measured at positions that correspond to the position Ps' or the position Ps".

In this raw cover, the thickness at the position Ps1 and the thickness at the position Ps2 are measured in the radial direction. However, the present invention is not limited thereto. The thickness, of each of the first formed product 30 and the second formed product 32, at the position that corresponds to the position Ps' near the buttress of the raw cover as described above, is measured in a direction tilted with respect to the radial direction, such that the direction matches the direction of the thickness, to be measured, of the raw cover. The thickness, of each of the first formed product 30 and the second formed product 32, at the position that corresponds to the position Ps" near the bead of the raw cover, is also measured in a direction tilted with respect to the radial direction, such that the direction matches the direction of the thickness, to be measured, of the raw cover.

In step 2, the thickness of the first formed product 30 is measured at an interval that is a central angle of 3° in the circumferential direction of the first drum 18. Accordingly, the relationship between the measurement position in the circumferential direction on the first formed product 30 and the thickness thereof at the position can be obtained. In step 4, the thickness of the second formed product 32 is measured at an interval that is a central angle of 3° in the circumferential direction of the second drum 20. Accordingly, the relationship between the measurement position in the circumferential direction on the second formed product 32 and the thickness thereof at the position can be obtained. In step 6, the first formed product 30 and the second formed product 32 are placed at such a relative position in the circumferential direction that the thickness obtained by summing the thicknesses of the first formed product 30 and the second formed product 32 becomes uniform in the circumferential direction. Thus, the thickness at the position Ps of the obtained raw cover is uniform in the circumferential direction.

In step 2, the thickness of the first formed product 30 is measured at an interval that is a central angle of 3° in the circumferential direction of the first drum 18. In step 4, the thickness of the second formed product 32 is measured at an interval that is a central angle of 3° in the circumferential direction of the second drum 20. In this manufacturing method, the circumferential interval is set to the central angle. Therefore, the thicknesses can be measured at circumferential intervals corresponding to the first formed product 30 and the second formed product 32 which have different diameters. In the present invention, in both or either of step 2 and step 4, the measurement can be performed at another circumferential interval such as a circumferential distance.

In step 4, the thickness of the second formed product 32 is measured at a predetermined circumferential interval. If the circumferential interval is reduced, the measurement can be performed with high accuracy. In addition, the thickness of a joint portion between the ends in the circumferential direction of each wound member can be inhibited from failing to be included among the thicknesses to be measured. The joint portion is the thickest portion, and the thickness thereof is preferably obtained from the viewpoint of calculating the thickness of the raw cover. From the viewpoint of inhibiting the thickness of the joint portion from failing to be measured, the circumferential interval for the second formed product 32 is preferably 3 mm or less in the circumferential direction of the inner circumferential surface of the second formed product 32. From the aforementioned viewpoint, the circumferential interval is preferably 3 mm or less in the circumferential direction of the outer circumferential surface 20a of the second drum 20 around which the second formed product 32 is wound. Since the radius of the first formed product 30 is smaller than that of the second formed product 32, the circumferential interval for the first formed product 30 in step 2 only has to be determined according to the circumferential interval for the second formed product 32.

For step 11, a correlation between the thickness and the vulcanization time is obtained in advance using a model for the raw cover. A vulcanization time is determined on the basis of the correlation and the calculated thickness at the position Ps. Accordingly, the raw cover can be vulcanized easily and appropriately.

In step 2, the thickness of the inner liner member 30a is measured. The thickness of the carcass ply 30b wound around the inner liner member 30a is measured. In step 2, each time one of the plurality of belt-shaped members is wound, the thickness obtained by the winding is measured. Accordingly, when variation in the thickness of the first formed product 30 occurs, it is possible to easily ascertain which member caused the variation in the thickness.

In step 4, the thickness of the first belt member 32a is measured. The thickness of the second belt member 32b wound around the first belt member 32a is measured. The thickness of the tread member 32c wound around the second belt member 32b is measured. In step 4, each time one of the plurality of other belt-shaped members is wound, the thickness obtained by the winding is measured. Accordingly, when variation in the thickness of the second formed product 32 occurs, it is possible to easily ascertain which member caused the variation in the thickness.

In the tire manufacturing method of the present invention, the thickness of the raw cover does not necessarily have to be calculated in step 10. The present invention can be implemented as long as the thickness at the position Ps of the raw cover is ascertained. Therefore, in step 11, the vulcanization time may be determined on the basis of the thickness at the position Ps1 of the first formed product 30 and the thickness at the position Ps2 of the second formed product 32.

### EXAMPLES

Hereinafter, effects of the present invention are shown by means of examples, but the present invention should not be construed in a limited manner based on the description of these examples.

### [Test 1]

### [Example 1]

A tire was manufactured using the forming apparatus in FIG. 1. A thickness was calculated at such a central angle that the circumferential interval on the outer circumferential surface of the second drum was 1 mm. Here, the thickness of a raw cover was calculated at the position Ps which is the center of the tread and the position Ps" near each of the beads (see FIG. 4).

### [Comparative Example 1]

The thickness of a raw cover was actually measured while the raw cover is sandwiched from two opposite points thereof. It took time to identify the position Ps and the position Ps". In addition, at the position Ps" near the bead, the measurement was not easily performed, the measurement also took time, and there was great variation in the measurement value.

From the result of Test 1, advantages of the present invention are obvious.

[Test 2]

### [Examples 2-4]

The thickness of each of raw covers was calculated in the same manner as in Example 1, except that the circumferential interval on the outer circumferential surface of the second drum was set as shown in Table 1.

### [Evaluation regarding Error in Measurement]

From each calculated thickness, a maximum value thereof in the circumferential direction was calculated. Meanwhile, the maximum value of the thickness of each raw cover was actually measured. The difference between the calculated maximum value of the thickness and the actually measured maximum value was calculated. The difference at each of the position Ps and the position Ps" is indicated as an index. A smaller index indicates smaller error. The smaller the index is, the better the result is.

### [Overall Evaluation]

In each of Examples 1 to 4, no gauge was used to measure the thickness of the raw cover, and the vulcanization time for the tire was shortened. In addition, no problem such as insufficient vulcanization occurred in obtaining the tire.

### [Table 1]

**Table 1: Evaluation results**

| I | | Example 1 | Example 2 | Example 3 | Example 4 |
|---|---|---|---|---|---|
| Measurement interval (mm) | | 1 | 3 | 5 | 7 |
| Error in measurement | Tread (position Ps) | 4 | 5 | 91 | 75 |
| | Bead (position Ps") | 4 | 5 | 69 | 55 |
| Overall evaluation | | Excellent | Excellent | Good | Good |

From the evaluation results, the advantages of the present invention are particularly obvious for Examples 1 and 2 in each of which the circumferential interval on the outer circumferential surface of the second drum was set to 3 mm or less.

### INDUSTRIAL APPLICABILITY

The method described above is widely applicable to methods for manufacturing pneumatic tires through a forming step and a vulcanizing step.

## Claims

1. A manufacturing method for a tire, the manufacturing method comprising the steps of:
(A) measuring a thickness of a first formed product (30) formed by winding a plurality of rubber members including a carcass ply (30b) around a first drum (18);
(B) measuring a thickness of a second formed product (32) formed by winding a plurality of other rubber members including a tread around a second drum (20);
(C) combining the first formed product (30) and the second formed product (32) with each other, to form a raw cover; and
(D) vulcanizing the raw cover for a vulcanization time that is determined on the basis of the thickness of the first formed product (30) and the thickness of the second formed product (32).

2. The manufacturing method according to claim 1, wherein,
in the step (A), a thickness, of the first formed product (30), at a position (Ps1) that corresponds to a position (Ps), in the raw cover, at which a longest time is required to increase a temperature of the raw cover, is measured, and,
in the step (B), a thickness, of the second formed product (32), at a position (Ps2) that corresponds to the position (Ps), in the raw cover, at which the longest time is required to increase the temperature, is measured.

3. The manufacturing method according to claim 2, wherein,
in the step (A), the thickness of the first formed product (30) is measured at a predetermined circumferential interval,
in the step (B), the thickness of the second formed product (32) is measured at a predetermined circumferential interval, and,
in the step (C), the first formed product (30) and the second formed product (32) are combined with each other at a relative position at which a difference between a maximum value and a minimum value in a circumferential direction of a thickness obtained by summing the thickness of the first formed product (30) and the thickness of the second formed product (32), becomes minimum.

4. The manufacturing method according to claim 3, wherein, in the step (A) and the step (B), the circumferential interval is set to a central angle.

5. The manufacturing method according to claim 3 or 4, wherein, in the step (B), the thickness of the second formed product (32) is measured with the circumferential interval on an outer circumferential surface (20a) of the second drum (20) being set to 3 mm or less.

6. The manufacturing method according to any one of claims 1 or 5, wherein, in the step (D), the vulcanization time is determined from a thickness of the raw cover on the basis of a preset correlation between the vulcanization time and a thickness of a model for the raw cover.

7. The manufacturing method according to any one of claims 1 or 6, wherein, in the step (A), each time one of the plurality of rubber members is wound around the first drum (18), a thickness obtained by the winding is measured.

8. The manufacturing method according to any one of claims 1 or 7, wherein, in the step (B), each time one of the plurality of other rubber members is wound around the second drum (20), a thickness obtained by the winding is measured.

## Patentansprüche

1. Herstellungsverfahren für einen Reifen, wobei das Herstellungsverfahren die Schritte umfasst:
(A) Messen einer Dicke eines ersten gebildeten Produkts (30), das durch Wickeln einer Vielzahl von Kautschukelementen, die eine Karkasslage (30b) umfassen, um eine erste Trommel (18) gebildet wird;
(B) Messen einer Dicke eines zweiten gebildeten Produkts (32), das durch Wickeln einer Vielzahl von anderen Kautschukelementen, die eine Lauffläche umfassen, um eine zweite Trommel (20) gebildet wird;
(C) Kombinieren des ersten gebildeten Produkts (30) und des zweiten gebildeten Produkts (32) miteinander, um eine Rohdecke zu bilden; und
(D) Vulkanisieren der Rohdecke für eine Vulkanisationszeit, die auf der Grundlage der Dicke des ersten gebildeten Produkts (30) und der Dicke des zweiten gebildeten Produkts (32) bestimmt wird.

2. Herstellungsverfahren nach Anspruch 1, wobei
in dem Schritt (A) eine Dicke des ersten gebildeten Produkts (30) an einer Position (Ps1) gemessen wird, die einer Position (Ps) in der Rohdecke entspricht, an der die längste Zeit zur Erhöhung der Temperatur der Rohdecke benötigt wird, und,
in dem Schritt (B) eine Dicke des zweiten gebildeten Produkts (32) an einer Position (Ps2) gemessen wird, die der Position (Ps) in der Rohdecke entspricht, an der die längste Zeit zur Erhöhung der Temperatur benötigt wird.

3. Herstellungsverfahren nach Anspruch 2, wobei
in dem Schritt (A) die Dicke des ersten gebildeten Produkts (30) in einem vorbestimmten Umfangsintervall gemessen wird,
in dem Schritt (B) die Dicke des zweiten gebildeten Produkts (32) in einem vorbestimmten Umfangsintervall gemessen wird, und,
in dem Schritt (C) das erste gebildete Produkt (30) und das zweite gebildete Produkt (32) miteinander an einer relativen Position kombiniert werden, an der eine Differenz zwischen einem Maximalwert und einem Minimalwert in einer Umfangsrichtung einer Dicke, die durch Summieren der Dicke des ersten gebildeten Produkts (30) und der Dicke des zweiten gebildeten Produkts (32) erhalten wird, minimal wird.

4. Herstellungsverfahren nach Anspruch 3, wobei in dem Schritt (A) und in dem Schritt (B) das Umfangsintervall auf einen zentralen Winkel eingestellt wird.

5. Herstellungsverfahren nach Anspruch 3 oder 4, wobei in dem Schritt (B) die Dicke des zweiten gebildeten Produkts (32) gemessen wird, wobei das Umfangsintervall auf einer Außenumfangsfläche (20a) der zweiten Trommel (20) auf 3 mm oder weniger eingestellt ist.

6. Herstellungsverfahren einem der Ansprüche 1 oder 5, wobei in dem Schritt (D) die Vulkanisationszeit aus einer Dicke der Rohdecke auf der Grundlage einer vorgegebenen Korrelation zwischen der Vulkanisationszeit und einer Dicke eines Modells für die Rohdecke bestimmt wird.

7. Herstellungsverfahren einem der Ansprüche 1 oder 6, wobei in dem Schritt (A) jedes Mal dann, wenn eines der Vielzahl von Kautschukelementen um die erste Trommel (18) gewickelt wird, eine durch das Wickeln erhaltene Dicke gemessen wird.

8. Herstellungsverfahren einem der Ansprüche 1 oder 7, wobei in dem Schritt (B) jedes Mal dann, wenn eines der Vielzahl von anderen Kautschukelementen um die zweite Trommel (20) gewickelt wird, eine durch das Wickeln erhaltene Dicke gemessen wird.

## Revendications

1. Procédé de fabrication d'un pneumatique, le procédé de fabrication comprenant les étapes consistant à :
(A) mesurer une épaisseur d'un premier produit formé (30) formé par enroulement d'une pluralité d'éléments en caoutchouc incluant une nappe de carcasse (30b) autour d'un premier tambour (18) ;
(B) mesurer une épaisseur d'un second produit formé (32) formé par enroulement d'une pluralité d'autres éléments en caoutchouc incluant une bande de roulement autour d'un second tambour (20) ;
(C) combiner le premier produit formé (30) et le second produit formé (32) l'un à l'autre, pour former une couverture brute ; et
(D) vulcaniser la couverture brute pour un temps de vulcanisation qui est déterminé sur la base de l'épaisseur du premier produit formé (30) et de l'épaisseur du second produit formé (32).

2. Procédé de fabrication selon la revendication 1, dans lequel,
dans l'étape (A), une épaisseur du premier produit formé (30), à une position (Ps1) qui correspond à une position (Ps), dans la couverture brute, à laquelle un temps le plus long est requis pour augmenter une température de la couverture brute, est mesurée, et,
dans l'étape (B), une épaisseur du second produit formé (32), à une position (Ps2) qui correspond à la position (Ps), dans la couverture brute, à laquelle le temps le plus long est requis pour augmenter la température, est mesurée.

3. Procédé de fabrication selon la revendication 2, dans lequel,
dans l'étape (A), l'épaisseur du premier produit formé (30) est mesurée à un intervalle circonférentiel prédéterminé,
dans l'étape (B), l'épaisseur du second produit formé (32) est mesurée à un intervalle circonférentiel prédéterminé, et,
dans l'étape (C), le premier produit formé (30) et le second produit formé (32) sont combinés l'un à l'autre à une position relative à laquelle une différence entre une valeur maximum et une valeur minimum dans une direction circonférentielle d'une épaisseur obtenue en ajoutant l'épaisseur du premier produit formé (30) et l'épaisseur du second produit formé (32) devient minimum.

4. Procédé de fabrication selon la revendication 3, dans lequel, dans l'étape (A) et dans l'étape (B), l'intervalle circonférentiel est fixé à un angle central.

5. Procédé de fabrication selon la revendication 3 ou 4, dans lequel, dans l'étape (B), l'épaisseur du second produit formé (32) est mesurée avec l'intervalle circonférentiel sur une surface circonférentielle extérieure (20a) du second tambour (20) qui est fixé à 3 mm ou moins.

6. Procédé de fabrication selon l'une quelconque des revendications 1 ou 5, dans lequel, dans l'étape (D), le temps de vulcanisation est déterminé à partir d'une épaisseur de la couverture brute sur la base d'une corrélation fixée au préalable entre le temps de vulcanisation et une épaisseur d'un modèle pour la couverture brute.

7. Procédé de fabrication selon l'une quelconque des revendications 1 ou 6, dans lequel, dans l'étape (A), chaque fois qu'un élément de la pluralité d'éléments en caoutchouc est enroulé autour du premier tambour (18), une épaisseur obtenue par l'enroulement est mesurée.

8. Procédé de fabrication selon l'une quelconque des revendications 1 ou 7, dans lequel, dans l'étape (B), chaque fois qu'un élément de la pluralité d'autres éléments en caoutchouc est enroulé autour du second tambour (20), une épaisseur obtenue par l'enroulement est mesurée.
